# EUROPEAN PATENT SPECIFICATION

(11) **EP 2 161 875 B1**
(45) Date of publication and mention of the grant of the patent: **15.08.2012**
(21) Application number: 08757872.0
(22) Date of filing: 27.06.2008
(51) Int. Cl.: H04L 12/24

(54) **Methods and devices for configuring configuration data of user access network**
Verfahren und Vorrichtungen zum Konfigurieren von Konfigurationsdaten eines Benutzerzugangsnetzes
Procédés et dispositifs pour configurer des données de configuration du réseau d'accès utilisateur

(30) Priority: 27.06.2007 CN 200710076311
(43) Date of publication of application: 10.03.2010
(73) Proprietor: Huawei Technologies Co., Ltd., Longgang District, Shenzhen Guangdong 518129 (CN)
(72) Inventor: WANG, Leibin, Shenzhen, Guangdong 518129 (CN); DONG, Jian, Shenzhen, Guangdong 518129 (CN)
(74) Representative: Isarpatent
(86) International application number: PCT/CN2008/071473
(87) International publication number: WO 2009/000214

(56) References cited:
- CN-A- 1 611 054
- CN-A- 1 859 722
- CN-A- 1 863 111
- CN-A- 101 087 208
- "Telecommunications and Internet converged Services and Protocols for Advanced Networking (TISPAN); NGN Functional Architecture; Network Attachment Sub-System (NASS); RES/TISPAN-02045-NGN-R2" ETSI STANDARDS, LIS, SOPHIA ANTIPOLIS CEDEX, FRANCE, no. V0.3.0, 1 May 2007 (2007-05-01), XP014039443 ISSN: 0000-0001

## Description

### FIELD OF THE INVENTION

The present invention relates to the field of communication technology, and more particularly to a technology for configuring a subscriber access network profile.

### BACKGROUND OF THE INVENTION

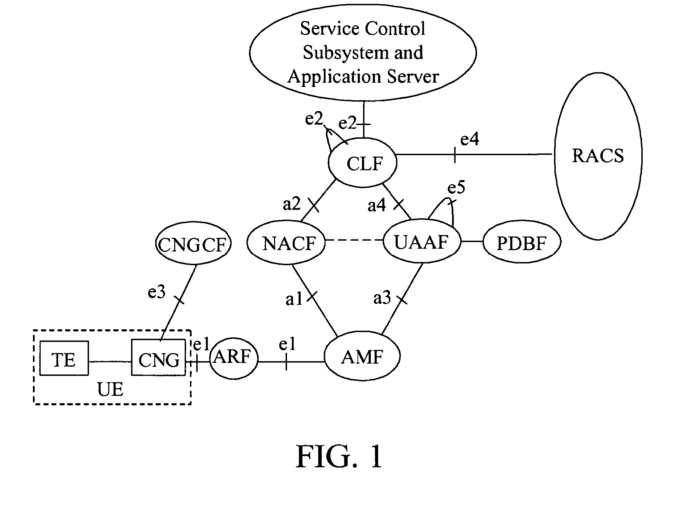

A network attachment subsystem (NASS) and a resource and admission control subsystem (RACS) form a transport control sub-layer of next generation network (NGN) architecture defined in the Telecommunications and Internet converged Services and Protocols for Advanced Networking (TISPAN) standards. As shown in FIG. 1, the NASS architecture mainly includes the following functional entities: a network access configuration function (NACF), an access management function (AMF), a connectivity session location and repository function (CLF), a user access authorization function (UAAF), a profile database function (PDBF), and a customer network gateway configuration function (CNGCF), and is mainly responsible for dynamic assignment of Internet protocol (IP) addresses and other user equipment configuration parameters (for example, using a dynamic host configuration protocol (DHCP)), user authentication before or during IP address assignment, network access authorization based on a user subscription profile, access network configuration based on a user profile, and location information management.

The NASS has interaction interfaces with the following functional entities: a service control subsystem and an application server, the RACS, an access relay function (ARF), user equipment (UE), and the like. In the TISPAN standards, interfaces and message exchange between the functional entities are introduced, and functions of interfaces between the NASS and external subsystems are also defined. An interface between the UAAF and the CLF is an a4 interface, and an interface between the CLF and the RACS is an e4 interface. Currently, the following messages are defined for the a4 interface in the TISPAN standards.
Access Profile Push message
Access Profile Pull message
Remove Access Profile message

The Access Profile Push message is used to push a subscriber access network profile from the UAAF to the CLF. The Access Profile Pull message is used by the CLF to request the subscriber access network profile from the UAAF. The Remove Access Profile message is used by the UAAF to request the CLF to delete the subscriber access network profile.

Meanwhile, the following messages are also defined for the e4 interface in the TISPAN standards.
Access Profile Push message
Access Profile Pull message
IP Connectivity Release Indication message

The Access Profile Push message is used to push a subscriber access network profile from the CLF to the RACS. The Access Profile Pull message is used by the RACS to request the subscriber access network profile from the CLF. The IP Connectivity Release Indication message is used by the CLF to report an IP disconnection event to the RACS, so that the RACS deletes the subscriber access network profile from an internal database accordingly.

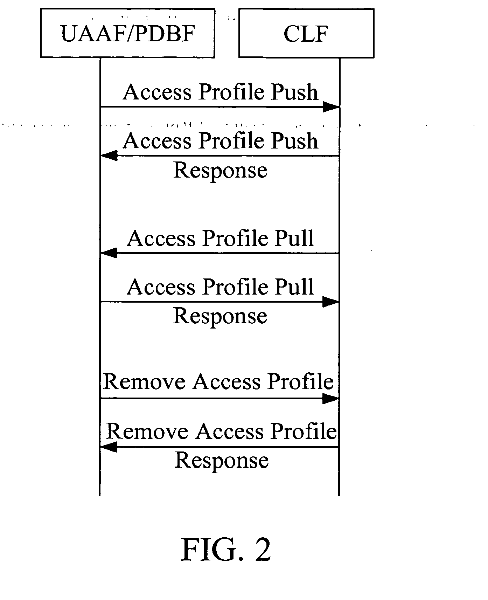

FIG. 2 is a flow chart of message exchange at an a4 interface between a UAAF and a CLF. In the a4 interface, an Access Profile Push message and an Access Profile Pull Response message contain data as shown in the following table.

| | | | |
|---|---|---|---|
| Subscriber ID | | An identity of a subscriber, and an access network profile of the subscriber contains the following data | |
| Globally Unique Address | | A globally unique address assigned to the subscriber | |
| | - Assigned IP Address | | - An IP address assigned to the UE |
| | - Address Realm | | - An address domain in which the IP address is significant |
| Logical Access ID | | An identity of a logical access to which the UE is connected | |

| Privacy Indicator | | A privacy indicator | |
|---|---|---|---|
| QoS Profile Information | | Quality of Service (QoS) profile information of the subscriber | |
| | - Transport Service Class | | - A transport service class |
| | - Media Type | | - A media type |
| | - UL Subscribed Bandwidth | | - A subscribed maximum uplink bandwidth |
| | - Downlink (DL) Subscribed Bandwidth | | - A subscribed maximum downlink bandwidth |
| | - Maximum priority | | - A maximum priority |
| | - Requestor Name | | - The name of the requestor |
| Initial | Gate Setting | Initial | gate setting of the subscriber |
| | - List of allowed destinations | | - A list of allowed destination addresses by default |
| | - UL Default Bandwidth | | - A default maximum uplink bandwidth |
| | - DL Default Bandwidth | | - A default maximum downlink bandwidth |

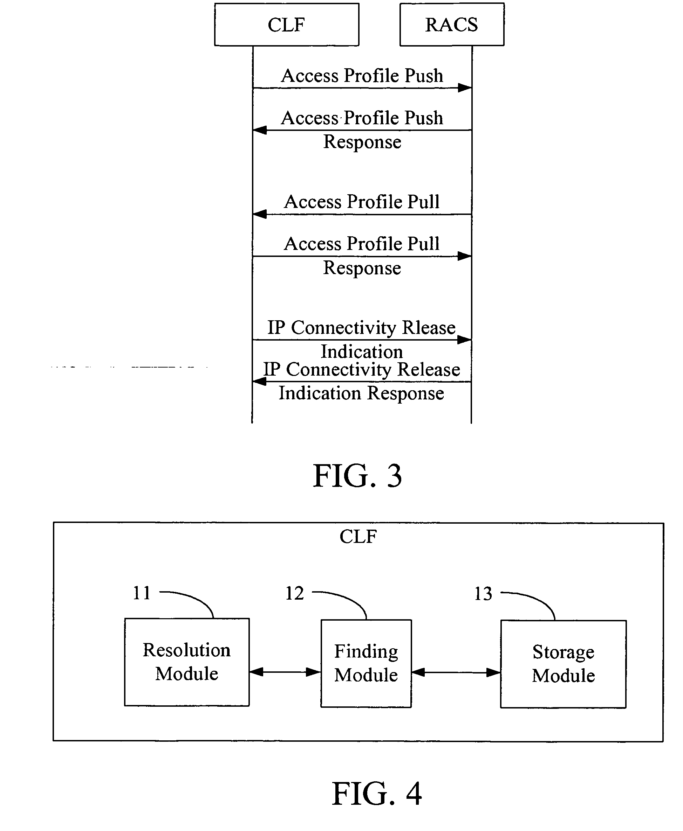

FIG. 3 is a flow chart of message exchange at an e4 interface between a CLF and an RACS. In the e4 interface, an Access Profile Push message and an Access Profile Pull Response message contain data as shown in the following table.

| | | | |
|---|---|---|---|
| Subscriber ID | | An identity of a subscriber, and an access network profile of the subscriber contains the following data | |
| Physical Access ID | | An identity of a physical access to which the UE is connected | |
| Logical Access ID | | An identity of a logical access to which the UE is connected | |
| Access Network Type | | A type of an access network to which the UE is attached | |
| Globally Unique Address | | A globally unique address assigned to the subscriber | |
| | - Assigned IP Address | | - An IP address assigned to the UE |
| | - Address Realm | | - An address domain in which the IP address is significant |
| QoS Profile Information | | QoS profile information of the subscriber | |
| | - Transport Service Class | | - A transport service class |
| | - Media Type | | - A media type |
| | - UL Subscribed Bandwidth | | - A subscribed maximum uplink bandwidth |
| | - DL Subscribed Bandwidth | | - A subscribed maximum downlink bandwidth |
| | - Maximum priority | | - A maximum priority |
| | - Requestor Name | | - The name of the requestor |
| Initial Gate Setting | | Initial gate setting of the subscriber | |
| | - List of allowed destinations | | - A list of allowed destination addresses by default |
| | - UL Default Bandwidth | | - A default maximum uplink bandwidth |
| | - DL Default Bandwidth | | - A default maximum downlink bandwidth |

During the implementation of the present invention, the inventor found that the prior art at least has the following problems.

As can be seen from the data in the messages for the a4 interface and the e4 interface, each subscriber access network profile includes QoS profile information and initial gate setting, which are main contents in the subscriber access network profile and have a large amount of data. A large amount of memory space is occupied for storing the information in functional entities such as the UAAF/PDBF, the CLF, and the RACS, and meanwhile, a large amount of network bandwidth resources are occupied for transmitting the information on the a4 interface and e4 interface.

"Telecommunications and Internet converged Services and Protocols for Advanced Networking (TISPAN); NGN Functional Architecture; Network Attachment Sub-System (NASS); RES/TISPAN-02045-NGN-R2" ETSI standard, LIS, SOPHIA ANTIPOLIS CEDEX, FRANCE, no. V0.3.0,1 May 2007 (2007-05-01), XP014039443 ISSN:0000-0001, describes the architecture of the Network Attachment Subsystem (NASS) and its role in the TISPAN NGN architecture as defined in ES 282 001 [3].

### SUMMARY OF THE INVENTION

Accordingly, various embodiments of the present invention are directed to a method and a device for configuring a subscriber access network profile, so as to save resources occupied by the subscriber access network profile.

One embodiment of the present invention provides a method for configuring a subscriber access network profile. The method includes the following steps.
storing profile information corresponding to a profile information identity, ID in a connectivity session location and repository function, CLF;
receiving, by the CLF, a message carrying the profile information ID; and
finding by the CLF, the profile information which is corresponding to the profile information ID and stored in the CLF according to the profile information ID in the message;
wherein the profile information ID is a quality of service, QoS, profile information ID and/or an initial gate setting ID.

One embodiment of the present invention further provides a method for configuring a subscriber access network profile, the method comprising:
storing profile information corresponding to a profile information identity, ID in a resource and admission control subsystem, RACS;
receiving, by the RACS, a message carrying the profile information ID; and
finding by the RACS, the profile information which is corresponding to the profile information ID and stored in the RACS according to the profile information ID in the message;
wherein the profile information ID is a quality of service, QoS, profile information ID and/or an initial gate setting ID.

One embodiment of the present invention further provides a CLF, which includes a resolution module, a finding module, and a storage module. The storage module is configured to store profile information corresponding to a profile information ID. The resolution module is configured to resolve a profile information ID carried in a message received by the CLF. The finding module is configured to find the profile information which is corresponding to the profile information ID and stored in the storage module according to the profile information ID; wherein the profile information ID is a quality of service, QoS, profile information ID and/or an initial gate setting ID.

The present invention further provides an RACS, which includes a resolution module, a finding module, and a storage module. The storage module is configured to store profile information corresponding to a profile information ID. The resolution module is configured to resolve a profile information ID carried in a message sent by a CLF. The finding module is configured to find the profile information which is corresponding to the profile information ID and stored in the storage module according to the profile information ID; wherein the profile information ID is a quality of service, QoS, profile information ID and/or an initial gate setting ID.

In the present invention, the CLF finds corresponding profile information in the profile information stored therein according to the profile information ID in the received message, and then accomplishes a corresponding service according to the profile information. Likewise, the CLF sends the message carrying the profile information ID to the RACS, and the RACS finds corresponding profile information in the profile information stored therein according to the profile information ID, and then accomplishes a corresponding service according to the profile information. Through the method, the subscriber access network profile is optimized by separating the profile information from the subscriber access network profile, thereby enabling a large number of subscribers to share the profile information. For functional entities, the amount of data in the subscriber access network profile is also greatly reduced, so that the memory space required for storing the subscriber access network profile is reduced, thereby reducing the hardware cost of the functional entities. For data transmission, the data traffic between the functional entities is reduced, thereby effectively reducing the network data traffic and improving the utilization of network bandwidth resources.

### BRIEF DESCRIPTION OF THE DRAWINGS

FIG. 1 is an architecture view of an NASS in the prior art;
FIG. 2 is a flow chart of message exchange at an a4 interface between a UAAF and a CLF in the prior art;
FIG. 3 is a flow chart of message exchange at an e4 interface between a CLF and an RACS in the prior art;
FIG. 4 is a functional block diagram of a CLF or an RACS according to a first embodiment, a second embodiment, and a third embodiment of the present invention;
FIG. 5 is a flow chart of a process in which the UAAF pushes a subscriber access network profile to the CLF and the CLF pushes the subscriber access network profile to the RACS according to the first embodiment of the present invention;
FIG. 6 is a flow chart of a process in which the CLF requests a subscriber access network profile from the UAAF and the RACS requests the subscriber access network profile from the CLF according to the first embodiment of the present invention;
FIG. 7 is a flow chart of a process in which the UAAF pushes a subscriber access network profile to the CLF and that the CLF pushes the subscriber access network profile to the RACS according to the second embodiment of the present invention;
FIG. 8 is a flow chart of a process in which the CLF actively obtains profile information from the UAAF according to the third embodiment of the present invention;
FIG. 9 is a functional block diagram of a CLF or an RACS according to a fourth embodiment of the present invention; and
FIG. 10 is a flow chart of a process in which the CLF adds, modifies, or deletes profile information according to the fourth embodiment of the present invention.

### DETAILED DESCRIPTION OF THE EMBODIMENTS

A technical solution provided by the present invention is as follows. A CLF finds corresponding profile information in profile information stored therein according to a profile information ID in a received message, and then accomplishes a corresponding service according to the profile information. Likewise, the CLF sends an Access Profile Push message carrying a profile information ID to an RACS, and the RACS finds corresponding profile information in profile information stored therein according to the profile information ID, and then accomplishes a corresponding service according to the profile information.

In practical application, different subscribers may not use different profile information such as QoS profile information and initial gate setting, but instead, subscribers of the same type share a set of QoS profile information and initial gate setting. For example, all voice service subscribers use a set of QoS profile information and initial gate setting, all data service subscribers use another set of QoS profile information and initial gate setting, and all video service subscribers use yet another set.

In such a manner, it is unnecessary to configure a set of profile information for each subscriber. In the technical solution provided in the present invention, the structure of the subscriber access network profile in the prior art is divided and optimized as follows, and the subscriber access network profile is divided into the following parts.

**Table 1 Subscriber Access Network Profile Table**

| | | | |
|---|---|---|---|
| Subscriber ID | | An identity of a subscriber, and an access network profile of the subscriber contains the following data | |
| Globally Unique Address | | A globally unique address assigned to the subscriber | |
| | - Assigned IP Address | | - An IP address assigned to the UE |
| | - Address Realm | | - An address domain in which the IP address is significant |
| Logical Access ID | | An identity of a logical access to which the UE is connected | |
| Privacy Indicator | | A privacy indicator | |
| Q o S Profile Information ID | | A QoS profile information ID of the subscriber | |
| Initial Gate Setting ID | | An initial gate setting ID of the subscriber | |

**Table 2 QoS Profile Information Table**

| QoS Profile Information | | | |
|---|---|---|---|
| QoS Profile Information ID | | A QoS profile information ID of the subscriber | |
| QoS Profile Information | | QoS profile information of the subscriber | |
| | - Transport Service Class | | - A transport service class |
| | - Media Type | | - A media type |
| | - UL Subscribed Bandwidth | | - A subscribed maximum uplink bandwidth |
| | - DL Subscribed Bandwidth | | - A subscribed maximum downlink bandwidth |
| | - Maximum priority | | - A maximum priority |
| | - Requestor Name | | - The name of the requestor |

**Table 3 Initial Gate Setting Table**

| | | | |
|---|---|---|---|
| Initial Gate Setting | | | |
| Initial Gate Setting ID | | An initial gate setting ID of the subscriber | |
| Initial Gate Setting | | Initial gate setting of the subscriber | |
| | - List of allowed destinations | | - A list of allowed destination addresses by default |
| | - UL Default Bandwidth | | - A default maximum uplink bandwidth |
| | - DL Default Bandwidth | | - A default maximum downlink bandwidth |

After the subscriber access network profile is divided and optimized, a QoS profile information ID and an initial gate setting ID are set in the subscriber access network profile. The QoS profile information and the initial gate setting are separately stored. The subscriber access network profile may find corresponding QoS profile information and initial gate setting in the QoS profile information table and the initial gate setting table according to the QoS profile information ID and the initial gate setting ID.

Specifically, the technical solution can be applied in a network in the following two manners.

In a first manner, the same QoS profile information and initial gate setting are statically configured in functional entities such as a UAAF/PDBF, a CLF, and an RACS. One profile may be used for subscribers of the same type. A QoS profile information ID and an initial gate setting ID are set in a4 interface and e4 interface messages. Each functional entity finds corresponding profile information in the QoS profile information (for example, the QoS profile information table) and the initial gate setting (for example, the initial gate setting table) statically configured therein. When the QoS profile information or the initial gate setting needs to be added, modified, or deleted, the functional entities need to synchronously perform the same operation.

In a second manner, the QoS profile information and the initial gate setting are statically configured in the UAAF/PDBF, and do not need to be configured in other functional entities. For each of the other functional entities, a previous functional entity dynamically pushes the QoS profile information and the initial gate setting to the functional entity (for example, the UAAF/PDBF pushes the information to the CLF, or the CLF pushes the information to the RACS), or the functional entity actively obtains related QoS profile information and initial gate setting from the previous functional entity. The QoS profile information and the initial gate setting are obtained and stored locally by each functional entity. If corresponding information is found in the CLF or the RACS according to a QoS profile information ID and an initial gate setting ID contained in a message subsequently received by the CLF or RACS, the corresponding information is used directly. If no corresponding information is found in the CLF or the RACS according to the QoS profile information ID and the initial gate setting ID contained in the subsequently received message (for example, an Access Profile Push message), the CLF or the RACS actively obtains the profile information corresponding to the ID from the previous functional entity thereof and locally stores the profile information. When the QoS profile information or the initial gate setting needs to be added, modified, or deleted, the operation needs to be performed in the UAAF/PDBF. After the profile information is updated, the UAAF/PDBF pushes the updated profile information to subsequent functional entities such as the CLF and the RACS.

The present invention is illustrated in detail below through specific embodiments.

### First Embodiment

The same QoS profile information and initial gate setting are statically configured in functional entities such as a UAAF/PDBF, a CLF, and an RACS. A QoS profile information ID and an initial gate setting ID are set in a4 interface and e4 interface messages. The QoS profile information table and the initial gate setting table as shown in Table 4 are configured in all the functional entities such as the UAAF/PDBF, the CLF, and the RACS.

**Table 4 QoS Profile Information Table and Initial Gate Setting Table**

| QoS Profile Information Table | | | Initial Gate Setting Table | |
|---|---|---|---|---|
| QoS Profile ID | QoS Profile Information | | Initial Gate Setting ID | Initial Gate Setting |
| Profile 1 | Profile Information 1 | | Profile 1 | Profile Information 1 |
| Profile 2 | Profile Information 2 | | Profile 2 | Profile Information 2 |
| Profile 3 | Profile Information 3 | | Profile 3 | Profile Information 3 |
| Profile 4 | Profile Information 4 | | | |
| Profile 5 | Profile Information 5 | | | |

In this embodiment, the system includes functional entities such as the UAAF/PDBF, the CLF, and the RACS. FIG. 4 is a functional block diagram of the CLF or the RACS (the CLF is taken as an example in FIG. 4). Referring to FIG. 4, the CLF or the RACS includes a resolution module 11, a finding module 12, and a storage module 13.

The resolution module 11 is configured to resolve a QoS profile ID and an initial gate setting ID carried in an Access Profile Push message. The finding module 12 is configured to find corresponding profile information in the storage module 13 according to the resolved QoS profile ID and initial gate setting ID.

The storage module 13 is configured to store the QoS profile information table and the initial gate setting table.

Specifically, the UAAF sends an Access Profile Push message to the CLF to push a subscriber access network profile to the CLF. The Access Profile Push message carries a profile ID, for example, QoS profile ID = 1, and initial gate setting ID = 3. After receiving the Access Profile Push message, the CLF resolves the profile ID in the Access Profile Push message, and transmits a resolution result to the finding module 12. The finding module 12 finds correct QoS profile information and initial gate setting in a locally configured profile table according to the profile ID. Then, the CLF binds the specific QoS profile information and initial gate setting to a subscriber profile, so as to control access-layer resources of the subscriber.

The CLF sends an Access Profile Push message to the RACS. The message carries a profile ID, for example, QoS profile ID = 1, and initial gate setting ID = 3. After the RACS receives the Access Profile Push message, the resolution module 11 resolves the profile ID carried in the Access Profile Push message, and transmits a resolution result to the finding module 12. The finding module 12 finds correct QoS profile information and initial gate setting in a locally configured profile table according to the profile ID. Then, the specific QoS profile information and initial gate setting are associated with a subscriber profile, so as to manage the access-layer resources of the subscriber.

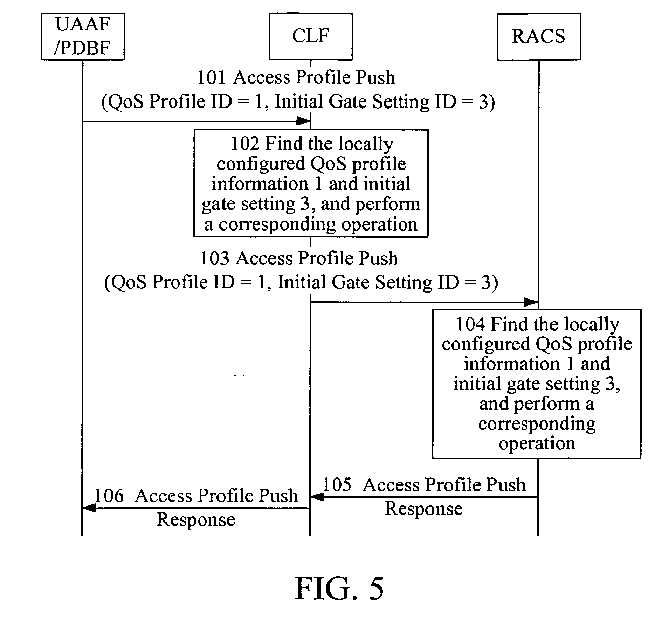

FIG. 5 is a flow chart of a process in which the UAAF pushes a subscriber access network profile to the CLF and the CLF pushes the subscriber access network profile to the RACS. Referring to FIG. 5, the process includes the following steps.

In step 101, when the UAAF detects that a subscriber gets on line, the UAAF sends an Access Profile Push message to the CLF to push a subscriber access network profile to the CLF. The message carries a profile ID, for example, QoS profile ID = 1, and initial gate setting ID = 3.

In step 102, after receiving the Access Profile Push message, the CLF finds correct QoS profile information and initial gate setting in a locally configured profile table according to the profile ID in the Access Profile Push message. Then, the CLF binds the specific QoS profile information and initial gate setting to a subscriber profile, so as to control access-layer resources of the subscriber.

In step 103, the CLF sends an Access Profile Push message to the RACS to push a subscriber access network profile to the RACS. The message carries a profile ID, for example, QoS profile ID = 1, and initial gate setting ID = 3.

In step 104, after receiving the Access Profile Push message, the RACS finds correct QoS profile information and initial gate setting in a locally configured profile table according to the profile ID in the Access Profile Push message. Then, the RACS associates the specific QoS profile information and initial gate setting with a subscriber profile, so as to manage the access-layer resources of the subscriber.

In step 105, the RACS finishes the operation and returns a response message to the CLF.

In step 106, the CLF returns a response message to the UAAF.

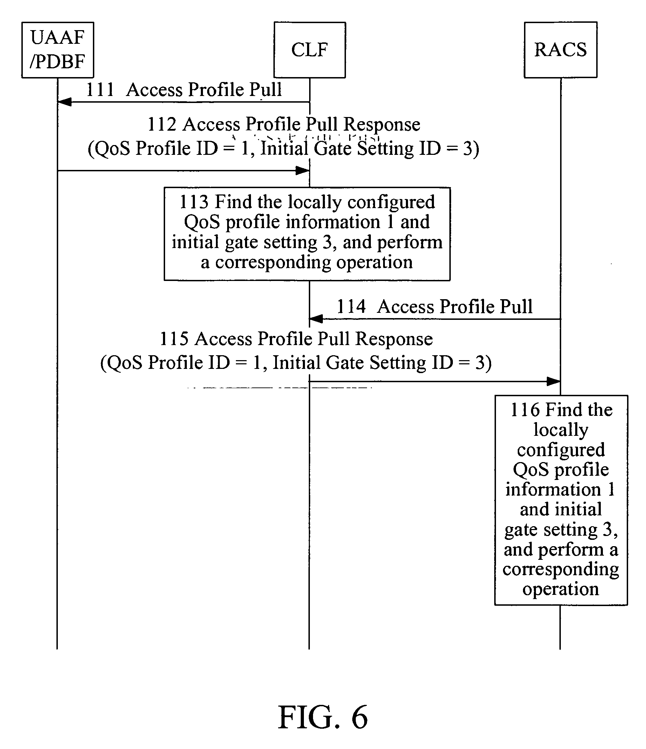

FIG. 6 is a flow chart of a process in which the CLF requests a subscriber access network profile from the UAAF and the RACS requests the subscriber access network profile from the CLF. Referring to FIG. 6, the process includes the following steps.

In step 111, when the CLF needs to query the UAAF for a subscriber access network profile, the CLF sends an Access Profile Pull message to the UAAF.

In step 112, the UAAF finds the subscriber access network profile and returns a response message to the CLF. The message carries a profile ID, for example, QoS profile ID = 1, and initial gate setting ID = 3.

In step 113, after receiving the response message, the CLF finds correct QoS profile information and initial gate setting in a locally configured profile table according to the profile ID in the response message, and performs a corresponding service operation.

In step 114, when the RACS needs to query the CLF for a subscriber access network profile, the RACS sends an Access Profile Pull message to the CLF.

In step 115, the CLF finds the subscriber access network profile and returns a response message to the RACS. The message carries profile IDs of QoS profile information and initial gate setting, for example, QoS profile ID = 1, and initial gate setting ID = 3.

In step 116, after receiving the response message, the RACS finds correct QoS profile information and initial gate setting in a locally configured profile table according to the profile IDs in the response message, and performs a corresponding service operation.

### Second Embodiment

QoS profile information and initial gate setting are statically configured in a UAAF/PDBF. During initialization, the UAAF pushes all the QoS profile information and initial gate setting to subsequent functional entities such as a CLF and an RACS.

FIG. 4 is a functional block diagram of the CLF or the RACS according to this embodiment. Referring to FIG. 4, the CLF or the RACS includes a resolution module 11, a finding module 12, and a storage module 13.

The resolution module 11 is configured to resolve a QoS profile ID and an initial gate setting ID carried in an Access Profile Push message. The finding module 12 is configured to find corresponding profile information in the storage module 13 according to the resolved QoS profile ID and initial gate setting ID.

The storage module 13 is configured to store the QoS profile information and the initial gate setting.

Specifically, the UAAF uses the collected QoS Profile information and initial gate setting to form a message package Profile Push, and sends the Profile Push to the CLF. After receiving the Profile Push, the CLF locally stores the profile information for subsequent service operations. When the UAAF sends an Access Profile Push message to the CLF, the message carries a QoS profile ID and an initial gate setting ID. After the CLF receives the message, the resolution module 11 resolves the QoS profile ID and the initial gate setting ID carried in the message, and transmits a resolution result to the finding module 12. The finding module 12 finds corresponding profile information in the storage module 13 according to the resolved QoS profile ID and initial gate setting ID.

In addition to the scenario that the UAAF/PDBF actively pushes the profile information to the CLF, the CLF may also send a Profile Pull message to the UAAF/PDBF to request the profile information. The UAAF/PDBF sends a Profile Pull Response message to the CLF. A message receiving module (not shown in FIG. 4) in the CLF is configured to receive the Profile Pull Response message sent by the UAAF/PDBF, and store profile information carried in the message in the storage module 13. Likewise, the RACS may also obtain the profile information in the same manner and store the profile information in the storage module 13.

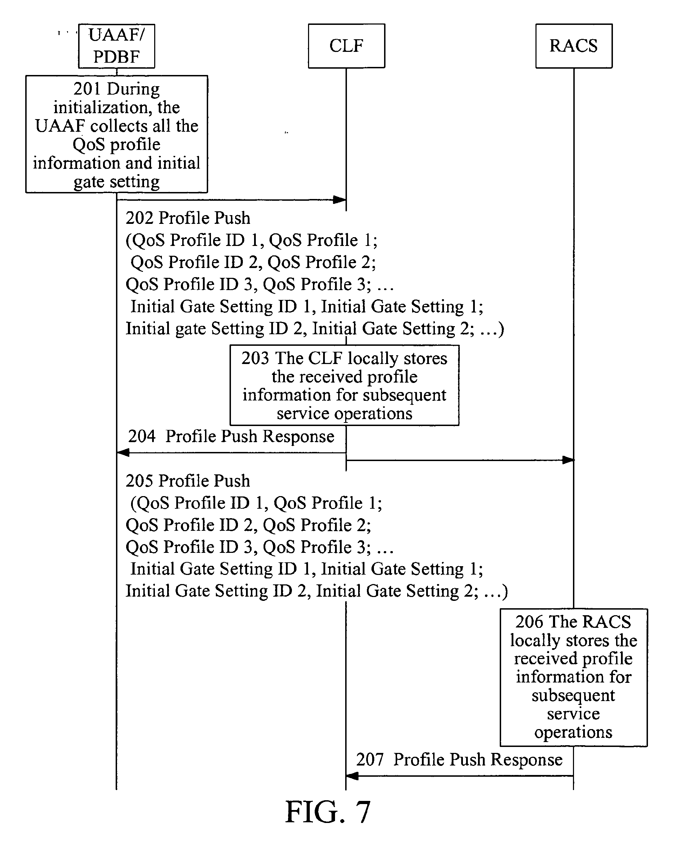

FIG. 7 is a flow chart of a process in which the UAAF pushes a subscriber access network profile to the CLF and the CLF pushes the subscriber access network profile to the RACS. Referring to FIG. 7, the process includes include the following steps.

In step 201, during initialization, the UAAF collects all the configured QoS profile information and initial gate setting.

In step 202, the UAAF uses the collected QoS profile information and initial gate setting to form a message package Profile Push, and sends the Profile Push to the CLF. According to the number of profiles, the UAAF may push the profiles to the CLF in batches, with each batch being a suitable number of profiles.

In step 203, after receiving the pushed profiles, the CLF locally stores the profile information for subsequent service operations (the subsequent service operations are the same as those in the first embodiment).

In step 204, after storing the profile information, the CLF returns a response message to the UAAF.

In step 205, the CLF pushes the profile information to the RACS.

In step 206, the RACS locally stores the received profile information.

In step 207, the RACS sends a response message to the CLF.

### Third Embodiment

QoS profile information and initial gate setting are statically configured in a UAAF/PDBF. During initialization, the UAAF pushes all the QoS profile information and initial gate setting to subsequent functional entities such as a CLF and an RACS. In such a manner, if no corresponding profile information is found in the CLF according to a profile information ID carried in a subscriber access network profile pushed by the UAAF to the CLF, the CLF may actively obtain the profile information corresponding to the profile information ID from the UAAF.

FIG. 4 is a functional block diagram of the CLF or the RACS according to this embodiment. Referring to FIG. 4, the CLF or the RACS includes a resolution module 11, a finding module 12, and a storage module 13.

The resolution module 11 is configured to resolve a QoS profile ID and an initial gate setting ID carried in an Access Profile Push message. The finding module 12 is configured to find corresponding profile information in the storage module 13 according to the resolved QoS profile ID and initial gate setting ID.

The storage module 13 is configured to store the QoS profile information and the initial gate setting.

A message sending module (not shown in FIG. 4) is configured to request the QoS profile information and the initial gate setting from the UAAF/PDBF if the finding module 12 fails to find the corresponding profile information.

Specifically, when the UAAF detects that a subscriber gets on line, the UAAF pushes a subscriber access network profile to the CLF, in which QoS profile information and initial gate setting carry a profile ID. After the CLF receives an Access Profile Push message with QoS profile information and initial gate setting carrying the profile ID, the resolution module 11 of the CLF resolves the profile ID in the Access Profile Push message, and the finding module 12 finds corresponding profile information according to the resolved profile ID. If the finding module 12 fails to find the corresponding profile information in the CLF according to the profile ID, the message sending module (not shown in FIG. 4) of the CLF sends a Profile Pull containing a profile ID to be queried to the UAAF. After receiving the Profile Pull, the UAAF finds correct profile information according to the profile ID, and returns a response message containing the profile ID and the profile information to the CLF. After obtaining the correct profile information, the CLF locally stores the obtained profile ID and profile information for subsequent service operations.

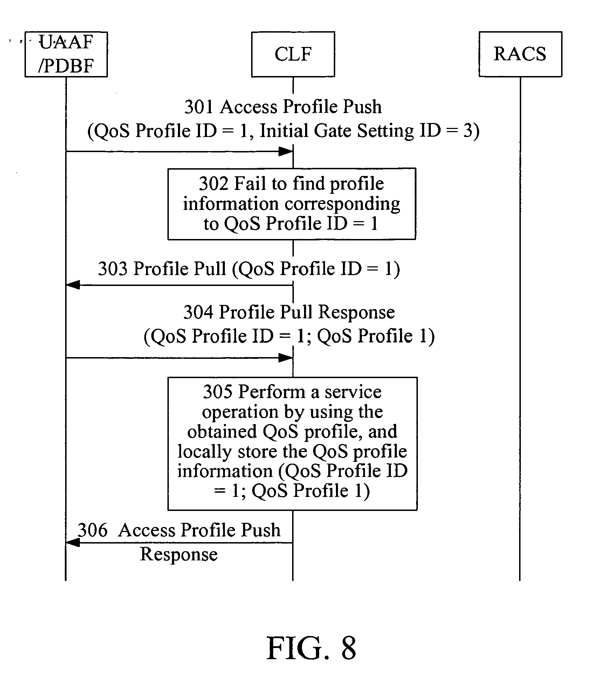

FIG. 8 is a flow chart of a process in which the CLF actively obtains profile information from the UAAF when the CLF fails to find corresponding profile therein according to the profile ID carried in the subscriber access network profile pushed by the UAAF. Referring to FIG. 8, the process includes the following steps.

In step 301, when the UAAF detects that a subscriber gets on line, the UAAF pushes a subscriber access network profile to the CLF, in which QoS profile information and initial gate setting carry a profile ID.

In step 302, after receiving an Access Profile Push message with QoS profile information and initial gate setting carrying the profile ID, the CLF fails to find corresponding profile information therein according to the profile ID.

In step 303, the CLF sends a Profile Pull containing a profile ID to be queried to the UAAF.

In step 304, after receiving the Profile Pull, the UAAF finds correct profile information according to the profile ID, and returns a response message containing the profile ID and the profile information to the CLF.

In step 305, after obtaining the correct profile information, the CLF performs a normal service operation, and locally stores the obtained profile ID and profile information for subsequent service operations.

In step 306, the CLF returns a service operation response message to the UAAF.

When the RACS receives the Profile Pull and fails to find corresponding profile information therein according to the profile ID, the RACS may actively query the related profile information from the CLF. The process of this scenario is basically the same as the above process, so the details will not be described herein again.

### Fourth Embodiment

QoS profile information and initial gate setting are statically configured in a UAAF/PDBF. During initialization, the UAAF pushes all the QoS profile information and initial gate setting to subsequent functional entities such as a CLF and an RACS. In such a manner, when the QoS profile information or the initial gate setting in the UAAF is added, modified, or deleted, the UAAF notifies subsequent functional entities such as the CLF and the RACS.

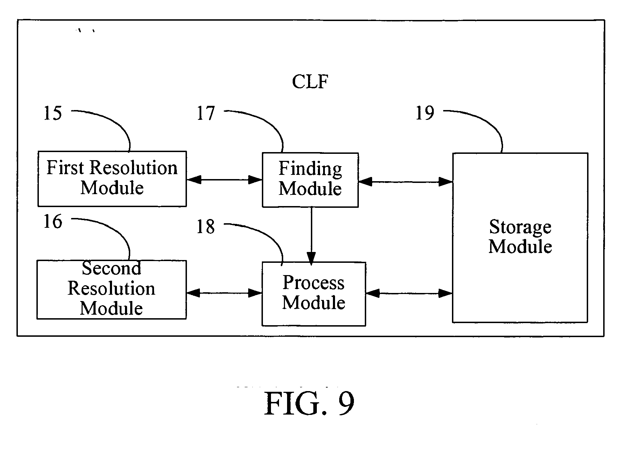

In this embodiment, the system includes functional entities such as the UAAF/PDBF, the CLF, and the RACS. FIG. 9 is a functional block diagram of the CLF or the RACS. Referring to FIG. 9, the CLF or the RACS includes a first resolution module 15, a second resolution module 16, a finding module 17, a processing module 18, and a storage module 19.

The first resolution module 15 is configured to resolve a QoS profile ID and an initial gate setting ID carried in a profile information update request (i.e. Profile Push message). The second resolution module 16 is configured to resolve an operation type carried in the profile information update request (i.e. Profile Push message). The finding module 17 is configured to find corresponding profile information in the storage module 19 according to the resolved QoS profile ID and initial gate setting ID. The processing module 18 is configured to add, modify, or delete the found profile information according to the operation type.

The storage module 19 is configured to store the QoS profile information and the initial gate setting before and after updating.

Specifically, when the profile information in the UAAF/PDBF is added, modified, or deleted, the UAAF firstly modifies local profile, and then sends a profile information update request (i.e. Profile Push) to the CLF. The Profile Push message contains an operation type, a profile ID, profile information, and the like. After the CLF receives the profile information update request, the first resolution module 15 resolves the profile ID, the finding module finds corresponding profile information in the storage module according to the profile ID, the second resolution module 16 resolves information about the operation type in the Profile Push message, and the processing module 18 performs a corresponding operation on, for example, adds, modifies or deletes, the profile information found by the finding module 17 according to the operation type resolved by the second resolution module 16.

After updating the profile information, the CLF sends a profile information update request (i.e. Profile Push) to the RACS. The profile information update request contains an operation type, a profile ID, profile information, and the like. The first resolution module 15 of the RACS resolves the profile ID, the finding module 17 finds corresponding profile information in the storage module 19 according to the profile ID, the second resolution module 16 resolves the operation type in the Profile Push message, and the processing module 18 performs a corresponding operation on, for example, adds, modifies or deletes, the profile information found by the finding module 17 according to the operation type resolved by the second resolution module 16.

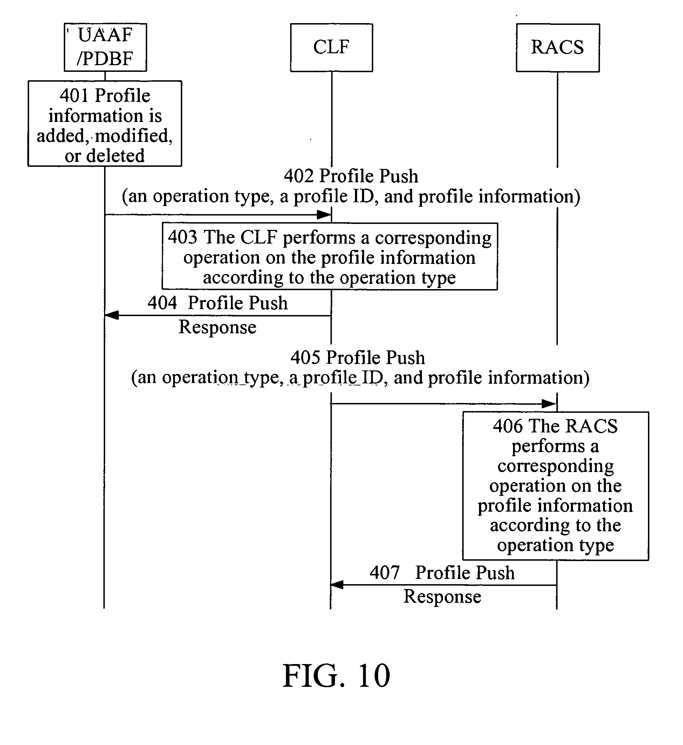

A specific process is as shown in FIG. 10, which includes the following steps.

In step 401, when the profile information in the UAAF/PDBF is added, modified, or deleted, the UAAF firstly modifies local profile.

In step 402, the UAAF sends a profile information update request (i.e. Profile Push) to the CLF. The Profile Push contains an operation type, a profile ID, profile information, and the like.

In step 403, after receiving the profile information update request, the CLF finds corresponding profile information according to the profile ID, and performs a corresponding operation on the profile information according to the operation type.

In step 404, after updating the profile information, the CLF returns a response message (i.e. Profile Push Response) to the UAAF.

In step 405, the CLF sends a profile information update request (i.e. Profile Push) to the RACS. The profile information update request contains an operation type, a profile ID, profile information, and the like.

In step 406, after receiving the profile information update request, the RACS finds corresponding profile information according to the profile ID, and performs a corresponding operation on the profile information according to the operation type.

In step 407, after updating the profile information, the RACS returns a response message (i.e. Profile Push Response) to the CLF.

As described above, according to the technical solution provided in the present invention, the present invention overcomes the deficiencies in the prior art by separating the QoS profile information and the initial gate setting from the subscriber access network profile. The QoS profile information table and the initial gate setting table are pre-stored in the CLF and the RACS. The UAAF/PDBF sends the Access Profile Push message carrying the QoS profile ID and the initial gate setting ID to the CLF, in which the Access Profile Push message does not contain the QoS information and the initial gate setting. The CLF finds the corresponding profile information in the QoS profile information table and the initial gate setting table stored therein according to the QoS profile ID and the initial gate setting ID, and then accomplishes a corresponding service according to the profile information. Likewise, the CLF sends the Access Profile Push message carrying the QoS profile ID and the initial gate setting ID to the RACS. The RACS finds the corresponding profile information in the QoS profile information table and the initial gate setting table stored therein according to the QoS profile ID and the initial gate setting ID, and then accomplishes a corresponding service according to the profile information. Through the present invention, the subscriber access network profile is optimized by separating the QoS profile information and the initial gate setting from the subscriber access network profile, thereby enabling a large number of subscribers to share the QoS profile information and the initial gate setting. For functional entities, the amount of data in the subscriber access network profile is also greatly reduced, so that the memory space required for storing the subscriber access network profile is reduced, thereby reducing the hardware cost of the functional entities. For data transmission, the QoS profile information and the initial gate setting of the subscriber are replaced by the profile ID, so that the data traffic between the functional entities is reduced, thereby effectively reducing the network data traffic and improving the utilization of network bandwidth resources.

Through the above description of the implementation, it is clear to persons skilled in the art that the present invention may be accomplished through hardware, or through software plus a necessary universal hardware platform. Based on this, the technical solution of the present invention may be embodied in the form of a software product. The software product may be stored in one nonvolatile storage medium (for example, CD-ROM, USB flash drive, or removable hard disk) and contain several instructions used to instruct computer equipment (for example, a personal computer, a server, or network equipment) to perform the method according to the embodiments of the present invention.

It should be understood that the above descriptions are merely preferred embodiments of the present invention, but not intended to limit the protection scope of the present invention, which is defined by the claims.

## Claims

1. A method for configuring a subscriber access network profile, comprising:
storing profile information corresponding to a profile information identity, ID, in a connectivity session location and repository function, CLF;
receiving (102; 113), by the CLF, a message carrying the profile information ID; and
finding (102; 113), by the CLF, the profile information which is corresponding to the profile information ID and stored in the CLF according to the profile information ID in the message;
**characterised in that**
the profile information ID is a quality of service profile information ID and/or an initial gate setting ID.

2. The method according to claim 1, wherein the received message is an Access Profile Push message or a response message to an Access Profile Pull message sent by the CLF.

3. The method according to claim 1, wherein the storing profile information corresponding to a profile information ID in a CLF comprises:
Storing (203), by the CLF, the profile information, which is corresponding to the profile information ID and pushed by a user access authorization function, UAAF, or a profile database function, PDBF, into a memory.

4. The method according to claim 1, wherein the method further comprises:
Receiving (403), by the CLF, a Profile Push message sent by a UAAF or a PDBF carrying the profile information ID and an operation type, and performing, by the CLF, an operation corresponding to the operation type on the profile information corresponding to the profile information ID according to the profile information ID and the operation type.

5. A method for configuring a subscriber access network profile, comprising:
storing profile information corresponding to a profile information identity, ID in a resource and admission control subsystem, RACS;
receiving (104; 116), by the RACS, a message carrying the profile information ID; and
finding (104; 116), by the RACS, the profile information which is corresponding to the profile information ID and stored in the RACS according to the profile information ID in the message;
**characterised in that**
the profile information ID is a quality of service profile information ID and/or an initial gate setting ID.

6. The method according to claim 5, wherein the received message is an Access Profile Push message or a response message to an Access Profile Pull message sent by the RACS.

7. The method according to claim 5, wherein the storing profile information corresponding to a profile information ID in a RACS comprises:
Storing (206), by the RACS, the profile information, which is corresponding to the profile information ID and pushed by the CLF, into a memory.

8. The method according to claim 5, wherein the method further comprises:
Receiving (406), by the RACS, a Profile Push message sent by the CLF carrying the profile information ID and an operation type, and performing, by the RACS, an operation corresponding to the operation type on the profile information corresponding to the profile information ID according to the profile information ID and the operation type.

9. A connectivity session location and repository function, CLF, comprising a resolution module (11), a finding module (12), and a storage module (13), wherein
the storage module (13) is configured to store profile information corresponding to a profile information identity, ID;
the resolution module (11) is configured to resolve the profile information ID carried in a message received by the CLF; and the finding module (12) is configured to find the profile information which is corresponding to the profile information ID and stored in the storage module (13) according to the profile information ID;
**characterised in that**
the profile information ID is a quality of service profile information ID and/or an initial gate setting ID.

10. The CLF according to claim 9, further comprising: a message sending module, configured to request the profile information from a user access authorization function, UAAF, or a profile database function, PDBF, if the finding module (12) fails to find the profile information which is corresponding to the profile information ID and stored in the storage module (13) according to the profile information ID.

11. A resource and admission control subsystem, RACS, comprising a resolution module (11), a finding module (12), and a storage module (13), wherein
the storage module (13) is configured to store profile information corresponding to a profile information identity, ID;
the resolution module (11) is configured to resolve the profile information ID carried in a message sent by a connectivity session location and repository function, CLF; and
the finding module (12) is configured to find the profile information which is corresponding to the profile information ID and stored in the storage module (13) according to the profile information ID;
**characterised in that**
the profile information ID is a quality of service profile information ID and/or an initial gate setting ID.

12. The RACS according to claim 11, further comprising: a message sending module, configured to request the profile information from the CLF if the finding module (12) fails to find the profile information which is corresponding to the profile information ID and stored in the storage module (13) according to the profile information ID, and store the obtained profile information in the storage module (13).

## Patentansprüche

1. Verfahren zum Konfigurieren eines Teilnehmerzugriffnetzprofils, das Folgendes umfasst:
Speichern von Profilinformationen, die einer Profilinformationskennung, Profilinformations-ID, entsprechen, in einer Konnektivitätssitzungsorts- und Aufbewahrungsortsfunktion, CLF;
Empfangen (102; 113) durch die CLF einer Nachricht, die die Profilinformations-ID führt; und
Ermitteln (102; 113) durch die CLF der Profilinformationen, die der Profilinformations-ID entsprechen und die in der CLF gespeichert sind, in Übereinstimmung mit der Profilinformations-ID in der Nachricht;
**dadurch gekennzeichnet, dass**
die Profilinformations-ID eine Dienstqualitäts-Profilinformations-ID und/oder eine anfängliche Gate-Einstell-ID ist.

2. Verfahren nach Anspruch 1, wobei die empfangene Nachricht eine Zugriffsprofil-Schiebenachricht oder eine Antwortnachricht auf eine Zugriffsprofil-Ziehnachricht, die durch die CLF gesendet wird, ist.

3. Verfahren nach Anspruch 1, wobei das Speichern von Profilinformationen, die einer Profilinformations-ID entsprechen, in einer CLF Folgendes umfasst:
Speichern (203) durch die CLF der Profilinformationen, die der Profilinformations-ID entsprechen und die durch eine Anwenderzugriffs-Autorisierungsfunktion, UAAF, oder durch eine Profildatenbankfunktion, PDBF, geschoben werden, in einem Speicher.

4. Verfahren nach Anspruch 1, wobei das Verfahren ferner Folgendes umfasst:
Empfangen (403) durch die CLF einer Profil-Schiebenachricht, die durch eine UAAF oder eine PDBF gesendet wird und die Profilinformations-ID und einen Operationstyp führt, und Ausführen durch die CLF einer Operation, die dem Operationstyp entspricht, an den Profilinformationen, die der Profilinformations-ID entsprechen, in Übereinstimmung mit der Profilinformations-ID und dem Operationstyp.

5. Verfahren zum Konfigurieren eines Teilnehmerzugriffnetzprofils, das Folgendes umfasst:
Speichern von Profilinformationen, die einer Profilinformationskennung, Profilinformations-ID, entsprechen, in einem Betriebsmittel- und Erlaubnis-Steueruntersystem, RACS;
Empfangen (104; 116) durch das RACS einer Nachricht, die die Profilinformations-ID führt; und
Ermitteln (104; 116) durch das RACS der Profilinformationen, die der Profilinformations-ID entsprechen und die in dem RACS gespeichert sind, in Übereinstimmung mit der Profilinformations-ID in der Nachricht;
**dadurch gekennzeichnet, dass**
die Profilinformations-ID eine Dienstqualitäts-Profilinformations-ID und/oder eine anfängliche Gate-Einstell-ID ist.

6. Verfahren nach Anspruch 5, wobei die empfangene Nachricht eine Zugriffsprofil-Schiebenachricht oder eine Antwortnachricht auf eine Zugriffsprofil-Ziehnachricht, die durch das RACS gesendet wird, ist.

7. Verfahren nach Anspruch 5, wobei das Speichern von Profilinformationen, die einer Profilinformations-ID entsprechen, in einem RACS Folgendes umfasst:
Speichern (206) durch das RACS der Profilinformationen, die der Profilinformations-ID entsprechen und die durch die CLF geschoben werden, in einem Speicher.

8. Verfahren nach Anspruch 5, wobei das Verfahren ferner Folgendes umfasst:
Empfangen (406) durch das RACS einer Profil-Schiebenachricht, die durch die CLF gesendet wird und die Profilinformations-ID und einen Operationstyp führt, und Ausführen durch das RACS einer Operation, die dem Operationstyp entspricht, an den Profilinformationen, die der Profilinformations-ID entsprechen, in Übereinstimmung mit der Profilinformations-ID und dem Operationstyp.

9. Konnektivitätssitzungsorts- und Aufbewahrungsortsfunktion, CLF, die ein Auflösungsmodul (11), ein Ermittlungsmodul (12) und ein Speichermodul (13) umfasst, wobei
das Speichermodul (13) konfiguriert ist, Profilinformationen, die einer Profilinformationskennung, Profilinformations-ID, entsprechen, zu speichern;
das Auflösungsmodul (11) konfiguriert ist, die Profilinformations-ID, die in einer durch die CLF empfangenen Nachricht geführt wird, aufzulösen; und das Ermittlungsmodul (12) konfiguriert ist, die Profilinformationen, die der Profilinformations-ID entsprechen und in dem Speichermodul (13) gespeichert sind, in Übereinstimmung mit der Profilinformations-ID zu ermitteln;
**dadurch gekennzeichnet, dass**
die Profilinformations-ID eine Dienstqualitäts-Profilinformations-ID und/oder eine anfängliche Gate-Einstell-ID ist.

10. CLF nach Anspruch 9, die ferner Folgendes umfasst: ein Nachrichtensendemodul, das konfiguriert ist, die Profilinformationen von einer Anwenderzugriffs-Autorisierungsfunktion, UAAF, oder von einer Profildatenbankfunktion, PDBF, anzufordern, falls das Ermittlungsmodul (12) die Profilinformationen, die der Profilinformations-ID entsprechen und die in dem Speichermodul (13) gespeichert sind, in Übereinstimmung mit der Profilinformations-ID nicht ermitteln kann.

11. Betriebsmittel- und Erlaubnis-Steueruntersystem, RACS, das ein Auflösungsmodul (11), ein Ermittlungsmodul (12) und ein Speichermodul (13) umfasst, wobei das Speichermodul (13) konfiguriert ist, Profilinformationen, die einer Profilinformationskennung, Profilinformations-ID, entsprechen, zu speichern;
das Auflösungsmodul (11) konfiguriert ist, die Profilinformations-ID, die in einer durch eine Konnektivitätssitzungsorts- und Aufbewahrungsortsfunktion, CLF, gesendeten Nachricht geführt wird, aufzulösen; und
das Ermittlungsmodul (12) konfiguriert ist, die Profilinformationen, die der Profilinformations-ID entsprechen und in dem Speichermodul (13) gespeichert sind, in Übereinstimmung mit der Profilinformations-ID zu ermitteln;
**dadurch gekennzeichnet, dass**
die Profilinformations-ID eine Dienstqualitäts-Profilinformations-ID und/oder eine anfängliche Gate-Einstell-ID ist.

12. RACS nach Anspruch 11, das ferner Folgendes umfasst: ein Nachrichtensendemodul, das konfiguriert ist, die Profilinformationen von der CLF anzufordern, falls das Ermittlungsmodul (12) die Profilinformationen, die der Profilinformations-ID entsprechen und in dem Speichermodul (13) gespeichert sind, in Übereinstimmung mit der Profilinformations-ID nicht ermitteln kann, und die erhaltenen Profilinformationen in dem Speichermodul (13) zu speichern.

## Revendications

1. Procédé permettant de configurer un profil de réseau d'accès abonné, comprenant :
la mémorisation d'informations de profil correspondant à une identité, ID, d'informations de profil dans une fonction d'emplacement de session de connectivité et de référentiel, CLF,
la réception (102 ; 113) par la fonction CLF d'un message transportant l'identité ID d'informations de profil, et
la recherche (102 ; 113), par la fonction CLF, des informations de profil qui correspondent à l'identité ID d'informations de profil et sont mémorisées dans la fonction CLF en fonction de l'identité ID d'informations de profil se trouvant dans le message
**caractérisé en ce que**
l'identité ID d'informations de profil est une identité ID d'informations de profil de qualité de service et/ou une identité ID d'établissement de portail initial.

2. Procédé selon la revendication 1, dans lequel le message reçu est un message d'inclusion de profil d'accès ou un message réponse à un message d'extraction de profil d'accès envoyé par la fonction CLF.

3. Procédé selon la revendication 1, dans lequel la mémorisation d'informations de profil correspondant à une identité ID d'informations de profil dans une fonction CLF comprend :
la mémorisation (203), par la fonction CLF, des informations de profil qui correspondent à l'identité ID d'informations de profil et sont incluses par une fonction d'autorisation d'accès utilisateur, UAAF, ou une fonction de base de données de profils, PDBF, dans une mémoire.

4. Procédé selon la revendication 1, dans lequel le procédé comprend en outre :
la réception (403), par la fonction CLF, d'un message d'inclusion de profil envoyé par une fonction UAAF ou une fonction PDBF transportant l'identité ID d'informations de profil et un type d'opération, et l'exécution, par la fonction CLF, d'une opération correspondant au type d'opération sur les informations de profil correspondant à l'identité ID d'informations de profil en fonction de l'identité ID d'informations de profil et du type d'opération.

5. Procédé permettant de configurer un profil de réseau d'accès abonné, comprenant :
la mémorisation d'informations de profil correspondant à une identité ID d'informations de profil dans un sous-système de commande de ressources et d'admission, RACS,
la réception (104 ; 116), par le sous-système RACS, d'un message transportant l'identité ID d'informations de profil, et
la recherche (104 ; 116), par le sous-système RACS, des informations de profil qui correspondent à l'identité ID d'informations de profil et sont mémorisées dans le sous-système RACS en fonction de l'identité ID d'informations de profil dans le message,
**caractérisé en ce que**
l'identité ID d'informations de profil est une identité ID d'informations de profil de qualité de service et/ou une identité ID d'établissement de portail initial.

6. Procédé selon la revendication 5, dans lequel le message reçu est un message d'inclusion de profil d'accès ou un message réponse à un message d'extraction de profil d'accès envoyé par le sous-système RACS.

7. Procédé selon la revendication 5, dans lequel la mémorisation d'informations de profil correspondant à une identité ID d'informations de profil dans un sous-système RACS comprend :
la mémorisation (206), par le sous-système RACS, des informations de profil qui correspondent à l'identité ID d'informations de profil et sont incluses par la fonction CLF, dans une mémoire.

8. Procédé selon la revendication 5, dans lequel le procédé comprend en outre :
la réception (406), par le sous-système RACS, d'un message d'inclusion de profil envoyé par la fonction CLF transportant l'identité ID d'informations de profil et un type d'opération, et l'exécution, par le sous-système RACS, d'une opération correspondant au type d'opération sur les informations de profil correspondant à l'identité ID d'informations de profil en fonction de l'identité ID d'informations de profil et du type d'opération.

9. Fonction d'emplacement de session de connectivité et de référentiel, CLF, comprenant un module de résolution (11), un module de recherche (12) et un module de mémorisation (13), dans laquelle
le module de mémorisation (13) est configuré pour mémoriser des informations de profil correspondant à une identité ID d'informations de profil,
le module de résolution (11) est configuré pour résoudre l'identité ID d'informations de profil transportée dans un message reçu par la fonction CLF ; et le module de recherche (12) est configuré pour trouver les informations de profil qui correspondent à l'identité ID d'informations de profil et sont mémorisées dans le module de mémorisation (13) en fonction de l'identité ID d'informations de profil,
**caractérisée en ce que**
l'identité ID d'informations de profil est une identité ID d'informations de profil de qualité de service et/ou une identité ID d'établissement de portail initial.

10. Fonction CLF selon la revendication 9, comprenant en outre : un module d'envoi de messages configuré pour demander les informations de profil provenant d'une fonction d'autorisation d'accès utilisateur, UAAF, ou d'une fonction de base de données de profils, PDBF, si le module de recherche (12) ne parvient pas à trouver les informations de profil qui correspondent à l'identité ID d'informations de profil et sont mémorisées dans le module de mémorisation (13) en fonction de l'identité ID d'informations de profil.

11. Sous-système de commande de ressources et d'admission, RACS, comprenant un module de résolution (11), un module de recherche (12) et un module de mémorisation (13), dans lequel
le module de mémorisation (13) est configuré pour mémoriser des informations de profil correspondant à une identité ID d'informations de profil,
le module de résolution (11) est configuré pour résoudre l'identité ID des informations de profil transportée dans un message envoyé par une fonction d'emplacement de session de connectivité et de référentiel, CLF, et
le module de recherche (12) est configuré pour trouver les informations de profil qui correspondent à l'identité ID d'informations de profil et sont mémorisées dans le module de mémorisation (13) en fonction de l'identité ID d'informations de profil, **caractérisé en ce que**
l'identité ID d'informations de profil est une identité ID d'informations de profil de qualité de service et/ou une identité ID d'établissement de portail initial.

12. Sous-système RACS selon la revendication 11, comprenant en outre : un module d'envoi de messages configuré pour demander les informations de profil provenant de la fonction CLF si le module de recherche (12) ne parvient pas à trouver les informations de profil qui correspondent à l'identité ID d'informations de profil et sont mémorisées dans le module de mémorisation (13) en fonction de l'identité ID d'informations de profil, et pour mémoriser les informations de profil obtenues dans le module de mémorisation (13).
